# EUROPÄISCHE PATENTSCHRIFT

(11) **EP 1 769 883 B1**
(45) Veröffentlichungstag und Bekanntmachung des Hinweises auf die Patenterteilung: **05.12.2007**
(21) Anmeldenummer: 05021119.2
(22) Anmeldetag: 28.09.2005
(51) Int. Cl.: B23Q 11/00, B08B 1/04

(54) **Vorrichtung zum Reinigen des Schaftes und der Anlagefläche eines Maschinen-Werkzeuges**
Device for cleaning the shank and the contact surface of a machine tool
Dispositif pour nettoyage de la tige et de la surface de contact d'une machine outil

(43) Veröffentlichungstag der Anmeldung: 04.04.2007
(73) Patentinhaber: Hüller Hille GmbH, 74821 Mosbach (DE)
(72) Erfinder: Bernhard, Albrecht, 74869 Schwarzach (DE)
(74) Vertreter: Rau, Manfred

(56) Entgegenhaltungen:
- EP-A- 0 945 213
- EP-A- 1 179 388
- CH-A5- 615 105

## Beschreibung

Die Erfindung betrifft eine Vorrichtung nach dem Oberbegriff des Anspruches 1.

Derartige Vorrichtungen sind in der Praxis allgemein verbreitet und beispielsweise aus der EP 1 179 388 B1 bekannt. Die Reinigungs-Elemente dieser Vorrichtungen bestehen aus Bürsten, mittels derer bei einem entsprechenden Drehantrieb der Bürsten der Schaft beziehungsweise die Anlagefläche gereinigt werden. Diese Ausgestaltung weist den Nachteil auf, dass die Bürsten einerseits verschleißen und andererseits selber verschmutzen. Nach einer gewissen Betriebszeit reinigen sie daher nicht mehr zuverlässig.

Dokument EP0945213 A zeigt eine Reinigungsvorrichtung für die Kegelschäfte einer Werkzeugaufnahme und die Anlagefläche eines Maschinen-Werkzeugs.Die Reinigung der an den Kegelschaft- und Anlageflächen angelagerten Partikel und Verschmutzungen erfolgt durch ein im Gehäuse drehangetriebenes Reinigungswerkzeug, das mit Flügelrad und Abstreifleisten versehen ist. Die Reinigungsvorrichtung wird mittels ihrer Tragkonstruktion so an die Werkzeugaufnahme herangefahren, daß der Schaft in die vom Reinigungswerkzeug gebildete schwach konische Ausnehmung gelangt. Ein Druckfluid wird in das Kanalsystem des Gehäuses eingeführt, so daß die erzeugten Ströme die an der Mantelfläche des Kegelschaftes sitzenden größeren Partikel abblasen. Gleichzeitig wird das Flügelrad durch die Druckluftströme in Drehung versetzt und durch eine weitere Axialbewegung der Reinigungsvorrichtung wird eine Position erreicht, in welcher die Abstreifleisten an der Mantelfläche des Schaftes und die radialen Abstreifleisten an der Anlagefläche des Schaftes mehr oder weniger dicht anliegen. Dadurch werden die Abstreifleisten der dem drehangetrieben Flügelrad anhaftenden kleineren Partikel durch den mechanischen Abstreifeffekt gelöst.

Der Erfindung liegt daher die Aufgabe zugrunde, eine Vorrichtung der gattungsgemäßen Art so weiterzubilden, dass eine einwandfreie Reinigung von Schaft und Anlagefläche eines Maschinen-Werkzeugs ohne Druckfluid dauerhaft gewährleistet ist.

Diese Aufgabe wird erfindungsgemäß durch das Merkmal im Kennzeichnungsteil des Anspruches 1 gelöst. Der mittels der Abstreif-Kante abgestreifte Schmutz beziehungsweise die abgestreiften Späne haften jedenfalls nicht an der Abstreif-Kante an. Die Abstreif-Kanten selber werden durch die Relativbewegung zwischen Schaft beziehungsweise Anlagefläche einerseits und Abstreif-Kante andererseits selbsttätig nachgeschärft und behalten dadurch ihre Funktionsfähigkeit.

Die Unteransprüche enthalten vorteilhafte Weiterbildungen der Erfindung.

Weitere Merkmale, Einzelheiten und Vorteile der Erfindung ergeben sich im Übrigen aus der nachfolgenden Beschreibung eines Ausführungsbeispiels anhand der Zeichnung. Es zeigt
- Fig. 1: einen Längs-Mittel-Schnitt durch eine Vorrichtung nach der Erfindung,

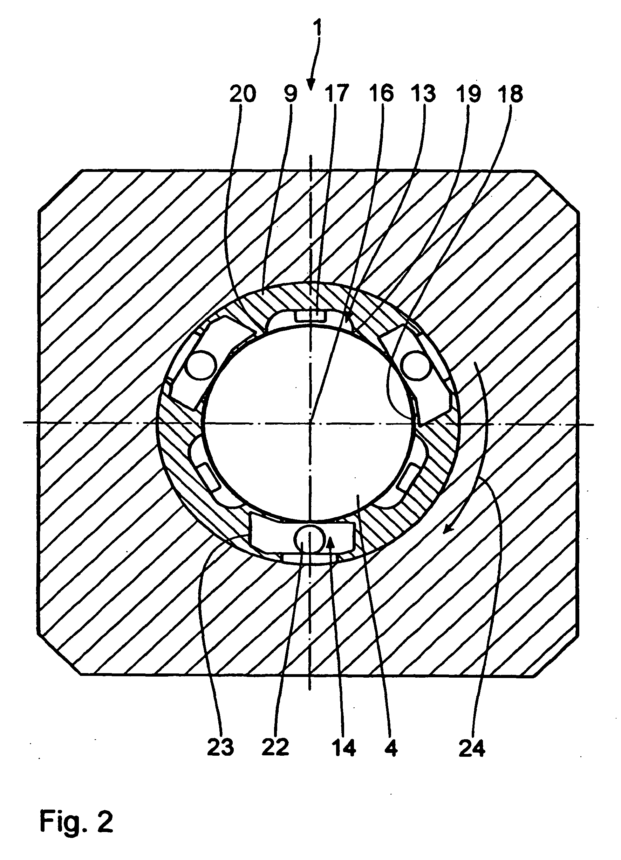

- Fig. 2: einen Querschnitt durch die Vorrichtung nach Fig. 1,

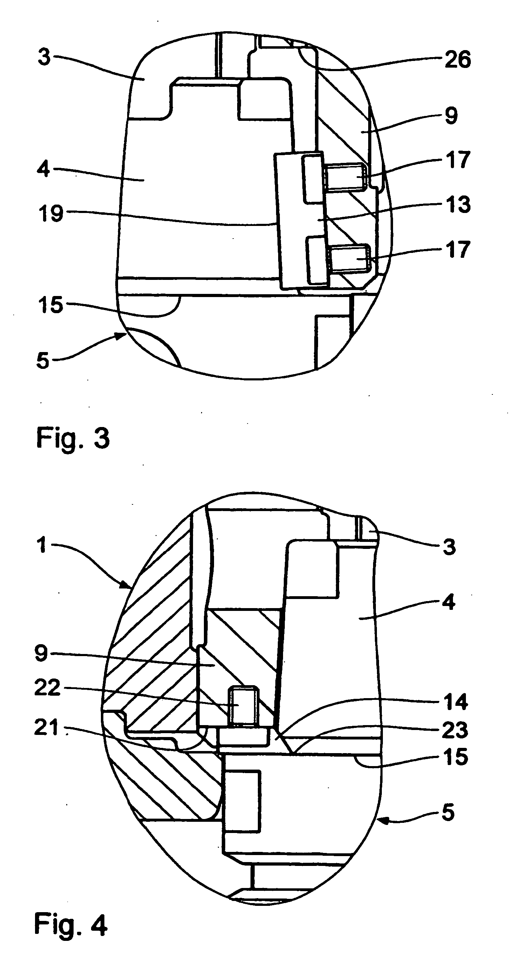

- Fig. 3: eine Teil-Vergrößerung aus Fig. 1, die ein Schaft-Abstreif-Blech zeigt, und
- Fig. 4: eine Teil-Vergrößerung aus Fig. 1, die ein Anlageflächen-Abstreif Blech zeigt.

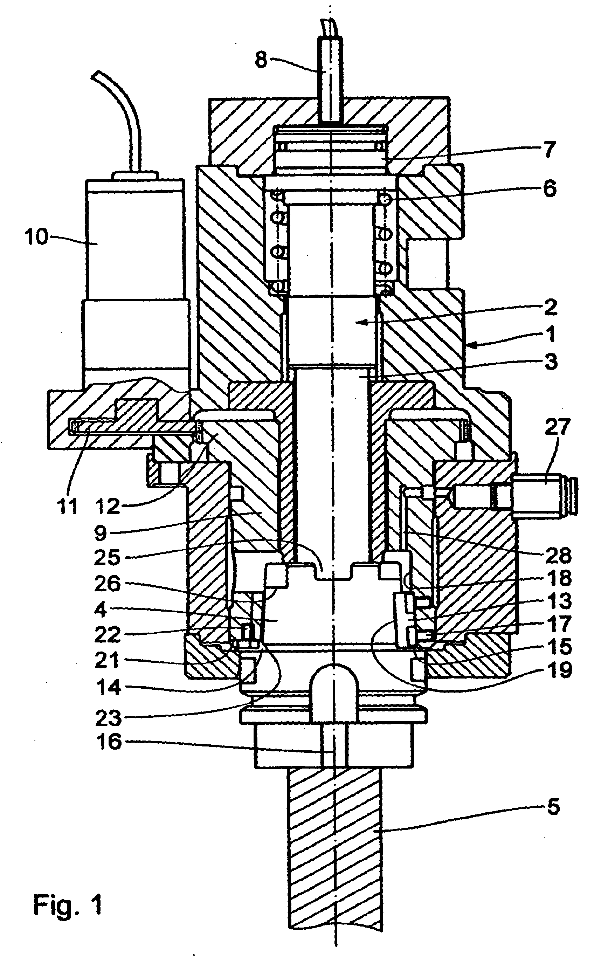

Die in der Zeichnung dargestellte Vorrichtung zum Reinigen des Schaftes und der Anlagefläche eines Maschinen-Werkzeuges weist ein Gehäuse 1 auf, das an einer Werkzeugmaschine oder einer Transporteinrichtung zum Transport von Werkzeugen von einem Magazin zu einer Werkzeugspindel einer Werkzeugmaschine angebracht sein kann, wie es beispielsweise in der EP 1 179 388 B1 dargestellt und beschrieben ist. In dem Gehäuse 1 ist eine Werkzeug-Spanneinrichtung 2 angeordnet, die eine Spannstange 3 aufweist. Diese Spannstange 3 weist an Ihrem einen - in Fig. 1 unteren - Ende nicht dargestellte Spannbacken auf, die in einen Hohlraum eines HSK-Schaftes 4 eines Werkzeugs 5 eingreifen, wobei "HSK" die Bedeutung von "Hohl-Schaft-Kegel" hat. Die Spannstange 3 ist mit einer sich gegen das Gehäuse 1 abstützenden vorgespannten Schrauben-Druck-Feder 6 belastet, die bei Verschiebungen der Spannstange 3 durch diese Feder 6, also vom Werkzeug 5 weg, die in dem Hohlraum des Schaftes 4 befindlichen Spannbacken aufspreizt und somit das Werkzeug 5 in das Gehäuse 1 hineinzieht und hält. Der Schaft 4 wird durch die Spanneinrichtung 2 radial fixiert. Das Lösen der Spannstange 3 in entgegengesetzter Richtung erfolgt mittels eines an dem dem Werkzeug 5 entgegengesetzten Ende der Spannstange 3 angebrachten Kolbens 7, der über einen Druck-Medium-Anschluss 8 mit Druckmedium, in der Regel also mit Druckflüssigkeit, beaufschlagbar ist, sodass ein Lösen der Spannstange 3 entgegen der Kraft der Feder 6 erfolgt. Derartige Werkzeug-Spanneinrichtungen 2 sind in Werkzeugspindeln allgemein üblich und werden auch bei Vorrichtungen zum Reinigen von Werkzeug-Schäften eingesetzt, wie aus der EP 1 179 388 B1 hervorgeht.

Im Gehäuse 1 ist eine Abstreif-Hülse 9 drehbar gelagert, die mittels eines am Gehäuse 1 angebrachten Getriebe-Motors 10 drehantreibbar ist. Die Antriebsübertragung erfolgt mittels eines am Motor 10 angebrachten Zahn-Ritzels 11, das in einen auf der Abstreif-Hülse 9 angebrachten Zahn-Ring 12 eingreift.

An der Abstreif-Hülse 9 sind über deren Innen-Umfang verteilt mehrere Schaft-Abstreif-Bleche 13 zum Abstreifen der Oberfläche des HSK-Schaftes 4 angebracht. Des Weiteren sind an der Abstreif-Hülse 9 mehrere Anlageflächen-Abstreif-Bleche 14 angebracht, die zum Abstreifen, das heißt Reinigen der Anlagefläche 15 des Werkzeugs 5 dienen. Diese Anlagefläche 15 erstreckt sich radial zur Mittel-Längs-Achse 16 des Werkzeugs 5 und dient zur Anlage an einer entsprechenden Ausricht-Gegen-Fläche an der Werkzeug-Spanneinrichtung der Werkzeugspindel einer Werkzeugmaschine. Der HSK-Schaft 4 wird dagegen in einem entsprechenden Konus der Werkzeug-Spanneinrichtung der Werkzeugspindel aufgenommen.

Die Schaft-Abstreif-Bleche 13, 14 bestehen aus Federstahl. Die Schaft-Abstreif-Bleche 13 sind mittels Schrauben 17 an der Innenwand 18 der Abstreif-Hülse 9 befestigt. Sie erstrecken sich in Richtung der Achse 16 über den Bereich, der am Schaft 4 zu reinigen ist. Sie weisen an ihren beiden sich in Richtung der Achse 16 erstreckenden, in Umfangsrichtung der Innenwand 18 der Hülse 9 voneinander beabstandeten Rändern Abstreif-Kanten 19, 20 auf, die elastisch federnd gegen den konusförmigen Schaft 4 anliegen, sodass beim Drehen der Abstreif-Hülse 9 mittels des Motors 10 um die Achse 16 sowohl die voreilende als auch die nacheilende Abstreif-Kante 19 bzw. 20 Späne, Schmutz und dergleichen vom Schaft 4 abstreifen.

An der zugeordneten Stirnseite 21 der Abstreif-Hülse 9 sind die Anlageflächen-Abstreif-Bleche 14 mittels Schrauben 22 befestigt. Sie weisen eine elastisch federnd an der Anlagefläche 15 anliegende Abstreif-Kante 23 auf, deren Reinigungswirkung naturgemäß am besten ist, wenn sie - bezogen auf die Drehrichtung 24 der Abstreif-Hülse 9 - voreilend angeordnet ist. Sowohl die Abstreif-Kanten 19, 20, als auch die Abstreif-Kante 23 verlaufen vom Schaft-Abstreif-Blech 13 beziehungsweise vom Anlagenflächen-Abstreif-Blech 14 weg schräg nach vom zum Schaft 4 beziehungsweise zur Anlagefläche 15, sodass ihre Reinigungs- beziehungsweise AbstreifWirkung immer am besten ist, wenn sie - bezogen auf die Drehrichtung 24 - voreilend angeordnet sind. Der Schaft 4 wird gegen ein Verdrehen während der Reinigung dadurch gesichert, dass an der Spannstange 3 ausgebildete Vorsprünge 25 in entsprechende Ausnehmungen 26 an dem Schaft 4 eingreifen.

Im Gehäuse 1 ist weiterhin ein Spül-Medium-Anschluss 27 ausgebildet, der mit ein oder mehreren Spül-Kanälen 28 in der Abstreif-Hülse 9 verbunden ist, sodass Spül-Medium, das heißt Spül-Gas oder Spül-Flüssigkeit, während des Abstreif- beziehungsweise Reinigungs-Vorgangs zum Reinigen und insbesondere zum Abtransport der abgestreiften Verunreinigungen auf den Schaft 4 gerichtet werden kann.

## Patentansprüche

1. Vorrichtung zum Reinigen eines Schaftes (4) und einer Anlagefläche (15) eines Maschinen-Werkzeugs (5),
- mit einem Gehäuse (1),
- mit einer im Gehäuse (1) angeordneten Werkzeug-Spanneinrichtung (2) für das Werkzeug (5),
- mit einem drehantreibbar im Gehäuse (1) angeordneten Träger für an den Schaft (4) und die Anlage-Fläche (15) anlegbare Reinigungs-Elemente, und
- mit Reinigungs-Elementen, die als Abstreif-Bleche (13, 14) ausgebildet sind, **dadurch gekennzeichnet, dass** die Abstreif-Bleche (13, 14) jeweils mindestens eine an den Schaft (4) beziehungsweise die Anlagefläche (15) elastisch federnd anlegbare Abstreif-Kante (19, 20, 23) aufweisen.

2. Vorrichtung nach Anspruch 1, **dadurch gekennzeichnet,**
**dass** die Abstreif-Bleche (13, 14) aus Federstahl bestehen.

3. Vorrichtung nach Anspruch 1 oder 2, **dadurch gekennzeichnet,**
**dass** die Abstreif-Bleche (13, 14) einstückig ausgebildet sind.

4. Vorrichtung nach einem der Ansprüche 1 bis 3, **dadurch gekennzeichnet,**
**dass** die Abstreif-Bleche (13, 14) lös- und auswechselbar am Träger angebracht sind.

5. Vorrichtung nach einem der Ansprüche 1 bis 4, **dadurch gekennzeichnet,**
**dass** der Träger als den Schaft (4) zumindest im Wesentlichen aufnehmende Abstreif-Hülse (9) ausgebildet ist, an deren Innenwand (18) das mindestens eine Schaft-Abstreif-Blech (13) und an deren Stirnseite (21) das mindestens eine Anlageflächen-Abstreif-Blech (14) angebracht ist.

6. Vorrichtung nach einem der Ansprüche 1 bis 5, **dadurch gekennzeichnet,**
**dass** mindestens ein in den Träger mündender Spül-Kanal (26) für ein Spül-Medium vorgesehen ist.

## Claims

1. Device for cleaning a shank (4) and a contact surface (15) of a machine tool (5), comprising a housing (1), a tool tensioning device (2) for the tool (5) arranged in housing (1), a support, arranged in the housing (1) so as to be rotationally drivable, for cleaning elements which can be positioned on the shank (4) and the contact surface (15), and cleaning elements which are configured as stripping metal sheets (13, 14), **characterised in that** the stripping metal sheets (13, 14) have at least one resilient stripping edge (19, 20, 23) respectively which can be positioned resiliently on the shank (4) and the contact surface (15) respectively.

2. Device according to claim 1, **characterised in that** the stripping metal sheets (13, 14) are composed of spring steel.

3. Device according to claim 1 or 2, **characterised in that** the stripping metal sheets (13, 14) are formed in one piece.

4. Device according to any one of claims 1 to 3, **characterised in that** the stripping metal sheets (13, 14) are releasably and exchangeably fixed to the support.

5. Device according to any one of claims 1 to 4, **characterised in that** the support is configured as a stripping sleeve (9) which at least substantially accommodates the shank (4) and which has the at least one shank-stripping metal sheet (13) fixed to its inner wall (18) and the at least one contact surface-stripping metal sheet (14) fixed to its end face (21).

6. Device according to any one of claims 1 to 5, **characterised in that** at least one rinsing duct (26) which flows into the support is provided for a rinsing medium.

## Revendications

1. Dispositif de nettoyage d'une tige (4) et d'une surface de contact (15) d'une machine-outil (5),
- avec un logement (1),
- avec un dispositif de tension d'outil (2) placé dans le logement (1) pour l'outil (5)
- avec un support placé dans le logement (1) de façon à pivoter pour les éléments de nettoyage pouvant être installés au niveau de la tige (4) et de la surface de contact (15), et
- avec des éléments de nettoyage conçus comme plaques de nettoyage (13, 14), **caractérisé en ce que** les plaques de nettoyage (13, 14) comportent au moins une arête de nettoyage (19, 20, 23) chacune pouvant être installée de façon élastique au moins au niveau de la tige (4) et/ou de la surface de contact (15).

2. Dispositif selon la revendication 1, **caractérisé en ce que** les plaques de nettoyage (13, 14) se composent d'acier à ressorts.

3. Dispositif selon la revendication 1 ou 2, **caractérisé en ce que** les plaques de nettoyage (13, 14) sont conçues d'une seule pièce.

4. Dispositif selon l'une quelconque des revendications 1 à 3, **caractérisé en ce que** les plaques de nettoyage (13, 14) sont installées de façon à être enlevées et échangées au niveau du support.

5. Dispositif selon l'une quelconque des revendications 1 à 4, **caractérisé en ce que** le support est conçu comme la douille de nettoyage (9) recevant au moins principalement la tige (4), douille au niveau de la paroi interne (18) de laquelle au moins une plaque de nettoyage de tige (13) et au niveau de la face avant (21) de laquelle au moins une plaque de nettoyage de surface de contact (14) est disposée.

6. Dispositif selon l'une quelconque des revendications 1 à 5, **caractérisé en ce qu'**au moins un canal de lavage (26) se jetant dans le support est prévu pour un milieu de lavage.
